# EUROPEAN PATENT APPLICATION

(11) **EP 1 933 225 A2**
(43) Date of publication of application: **18.06.2008**
(21) Application number: 07121949.7
(22) Date of filing: 30.11.2007
(51) Int. Cl.: G06F 3/01

(54) **Using sequential taps to enter text**

(30) Priority: 06.12.2006 US 635331
(71) Applicant: Palo Alto Research Center Incorporated, Palo Alto, California 94304 (US)
(72) Inventor: Newman, Mark W, Ann Arbor, GA 48104 (US); Partridge, Kurt, Palo Alto, CO 94306 (US); Begole, James, San Jose, CA 95129 (US); Lee, Seungyon, Atlanta, GA 30318 (US)
(74) Representative: Skone James, Robert Edmund

(57) **Abstract**

One embodiment of the present invention provides a system for entering text. The system starts by receiving (400) a sequence of finger-triggered events. The system then attempts to match (408) the sequence of finger-triggered events to one or more predetermined sequences of finger-triggered events. If the sequence matches a predetermined sequence, the system outputs (412) at least one character corresponding to the predetermined sequence.

## Description

The present invention relates to techniques for entering text into electronic devices. More specifically, the present invention relates to a method and apparatus for entering text using sequential taps.

As mobile electronic devices become an important part of our everyday lives, they facilitate an extended computing environment, which has led to the emergence of the concept of a "nomadic life." People living such a nomadic life often face a multi-tasking situation where tasks are constantly interrupted and interrupt each other. In this multi-tasking situation, the requirements for mobile text entry are varied, and depend on the user's environment (e.g., living room couch, automobile, airplane, airport waiting area, sidewalk, or office hallway), the user's concurrent activities (e.g., walking, talking, reading, driving, cycling, watching TV, eating, or holding an infant), and the purpose of the text entry (e.g., transcription, reminders, appointments, contact information, notes, application input such as entering a driving destination, communication such as SMS, or email). Each combination of these factors suggests a different set of requirements for a text-entry device. In some situations one-handed devices, such as the "Twiddler" (US Pat. No.: 5,267,181), may be beneficial while in other cases "multi-tap" or predictive text entry on a phone is sufficient.

The criteria used to select these text-entry devices can be determined by "contextual appropriateness." In the core part of contextual appropriateness, as Dourish stated as an ecological perspective, human cognition is located within a complex involving the organism, the action, and the environment rather than being limited to a neural phenomenon (see Dourish, P., Where the Action Is, MIT Press, 2001). Thus, the contextual appropriateness to select and use a mobile text entry system includes: short device acquisition time; efficient text input; low cognitive and motor demand; and form factor, which enable user to switch from one task to another without any obtrusion.

The task of device acquisition is an area where many mobile text entry systems fall short. The typical interaction to handle most button-based mobile text entry devices usually follows a series of actions such as "grab-press-release." In other words, the device is often carried in a bag or pocket or attached on an appropriate surface to carry. As a pre-action, user needs to "grab" the device to adjust the location of the button on the device to each finger. When typing a character into the device, the user must "press" the right location/button. Finally, a "release" post-action usually follows the main action requiring the user to return the device to the initial position.

Form factor is another of the contextual appropriateness factors that is important to the users of mobile devices. Device miniaturization effects anyone who carries or wears cutting-edge technology embedded in their portable device. However, determining an appropriate tradeoff between device miniaturization and human physical constraints is complicated. On one hand, a device with a small and thin form factor may attract consumers whose priority is the portability of the device. On the other hand, especially when using an interface where multiple buttons are assigned to one finger, a user may struggle because the buttons that control the device are too small or have too many functions for the user to control the device properly. Accot and Zhai stated that device size and movement scale affects input control quality, and the performance limit of small movement scale tends to be limited by motor precision (see J. Accot and S. Zhai, Scale Effects in Steering Law Tasks, Proceedings of the SIGCHI Conference on Human Factors in Computing Systems, ACM Press, 2001). The result is based on the fact that, unlike the physically scaleable systems within the device, the scale of the human body which controls the device within a limited motor precision tolerance is fixed. Thus, the limit of device miniaturization tends to be determined by the physical constraints of the human body rather than the technical constraints.

Many text entry mechanisms have been proposed to meet the qualifications of contextual appropriateness, and each mechanism has its own speed and error characteristics. We focus herein on techniques that require only one hand, because in a non-desktop setting, the other hand may be occupied with another task, such as holding an item or driving. However, most existing solutions involve arrays of buttons, which must be large enough to avoid accidental presses, but must occupy a small total space to keep device size down and to allow a finger to easily reach all buttons. These constraints have often resulted in text entry methods that are slower and more frustrating than is desirable.

Mobile device designers have suggested systems such as the Unistrokes system (US Pat. No.: 5,596,656) or the Graffiti system, which are one-handed text-entry systems where the user enters text into a mobile device using a stylus. With such systems, the user enters one of a series of predefined strokes onto a specially prepared pad which is then interpreted by the mobile device as a character or an action (i.e., an action such as "backspace").

Other mobile device designers have suggested systems such as the Twiddler, which is a hand-held portable unit for text-entry. The Twiddler has text entry buttons on one face and control buttons on another. When using the device, the user selects how the buttons react to presses (i.e., by outputting a text character, a number, or an ASCII character). The Twiddler is a "chorded" entry device. In other words, the Twiddler requires that the user hold down multiple buttons simultaneously to enter some characters.

Unfortunately, although each of the above-described systems potentially meets one or more aspects of contextual appropriateness, the systems often fail to meet the other aspects or introduce problems of their own.

One embodiment of the present invention provides a system for entering text. The system starts by receiving a sequence of finger-triggered events. The system then attempts to match the sequence of finger-triggered events to one or more predetermined sequences of finger-triggered events. If the sequence matches a predetermined sequence, the system outputs at least one character corresponding to the predetermined sequence.

In a variation of this embodiment, while receiving a sequence of finger-triggered events the system: (1) detects a series finger-triggered events; (2) identifies a finger that caused each event in the series; and (3) records the identity of the finger that caused each event in the series.

In a variation on this embodiment, detecting the series of finger-triggered events involves at least one of: (1) detecting contact of a finger on a touch-sensitive surface; (2) detecting taps of a finger on a sound-sensitive surface; (3) detecting finger motions by measuring at least one of, muscle movement, bone movement, electrical impulses in the skin, or other physiological indicators; or (4) detecting finger motions using sensors worn, mounted on, or implanted in at least one finger.

In a variation of this embodiment, when attempting to match the sequence of finger-triggered events, the system determines when a predetermined number of finger-triggered events have occurred. When the predetermined number of finger-triggered events have occurred, the system attempts to match the predetermined number of finger-triggered events to one or more predetermined sequences of finger-triggered events.

In a variation of this embodiment, when attempting to match the sequence of finger-triggered events, the system determines when an end-of-sequence finger-triggered event has occurred. When an end-of-sequence finger-triggered event occurs, the system attempts to match the sequence of finger-triggered events preceding the end-of-sequence finger-triggered event to one or more predetermined sequences of finger-triggered events.

In a variation of this embodiment, when attempting to match the sequence of finger-triggered events, the system determines, as each finger-triggered event in a sequence of finger-triggered events occurs, whether the finger-triggered event in combination with a preceding sequence of finger-triggered events is a prefix of a predetermined sequence of finger-triggered events. If so, the system awaits a next finger-triggered event. If not, the system attempts to match the finger-triggered event in combination with the preceding sequence of finger-triggered events to one or more predetermined sequences of finger-triggered events.

In a variation of this embodiment, if the sequence of finger-triggered events does not match a predetermined sequence of finger-triggered events from the series of predetermined sequences of finger-triggered events, the system outputs an error signal and commences receiving of the next sequence of finger-triggered events.

In a variation of this embodiment, the sequence of finger-triggered events includes at least one of an event triggered by another part of the body or an event triggered by manipulating a mechanical device.

### BRIEF DESCRIPTION OF THE FIGURES

FIG. 1 illustrates a PDA coupled to a touch-sensitive device in accordance with an embodiment of the present invention.

FIG. 2 illustrates a series of finger-mounted signaling devices and a wrist-mounted transceiver which is coupled to a PDA in accordance with an embodiment of the present invention.

FIG. 3 illustrates a wrist-mounted detection device which is coupled to a PDA in accordance with an embodiment of the present invention.

FIG. 4 illustrates an acoustic sensor which is coupled to a PDA in accordance with an embodiment of the present invention.

FIG. 5 illustrates a first identification of fingers in accordance with an embodiment of the present invention.

FIG. 6 illustrates a second identification of fingers in accordance with an embodiment of the present invention.

FIG. 7 illustrates a third identification of fingers which includes an identification for the palm of the hand in accordance with an embodiment of the present invention.

FIG. 8 presents a finger-stroke-to-character map in accordance with an embodiment of the present invention.

FIG. 9 presents a finger-stroke-to-character map with a "repeat" finger-stroke in accordance with an embodiment of the present invention.

FIG. 10 illustrates a finger-stroke-to-character map that includes two number maps, finger-stroke-to-alphabetic-character map, and finger-stroke-to-ASCII-character map in accordance with an embodiment of the present invention.

FIG. 11 presents a flowchart illustrating the process of entering text using a sequence of a predetermined length in accordance with an embodiment of the present invention.

FIG. 12 presents a flowchart illustrating the process of entering text using a termination event in accordance with an embodiment of the present invention.

FIG. 13 presents a flowchart illustrating the process of entering text using prefixes in accordance with an embodiment o the present invention.

Table 1 illustrates a finger-stroke-to-character map in accordance with an embodiment of the present invention.

Embodiments of the present invention facilitate entering text on a variety of surfaces. In a first embodiment, the text entry system includes a "sensitive surface," such as a single-touch-resistive/capacitive surface. The single-touch-resistive/capacitive surface is widely used in touchpad pointing devices such as the "tablet" or "laptop" personal computers (PCs).

However, since the single-touch surface cannot detect multiple touches of a finger tapping gesture, an unexpected detection may occur. For example, when the user taps the second finger before releasing the first finger, the single-touch surface may interpret these two taps as a point-and-drag gesture rather than two discrete taps. A multi-touch-resistive/capacitive surface is an alternative surface that solves this problem. However, the multi-touch-resistive/capacitive surface is expensive and is not widely used in the market.

In a another embodiment, the text entry system includes an "augmented natural surface." For example, the augmented natural surface can be a sensing surface implemented with acoustic sensors such as "Tapper" (Paradiso et al., 2002) or with visual sensors. This approach can be adapted to temporarily turn a restaurant table, dashboard, or sidewalk into a sensitive surface.

In a yet another embodiment, the text entry system includes a wearable device. For example, a wrist- or hand-mounted acoustic sensor can function as the wearable device. Gloves or finger-worn interfaces supported by bending sensors and accelerometers are a possible form factor for wearable devices. A second form factor is a fingernail-mounted interface which is implemented with tiny accelerometers such as "smart dust."

In an alternative embodiment, the text entry systems in the preceding sections are implemented on the small electronic device itself, such as a mouse or a mobile phone. Although such a system does not fully meet the initial goal of lowering the device acquisition time (because the user has to "grab-press-return" the device in order to use the text-entry system), using existing devices which have already gained popularity facilitates easier adoption of the text-entry system.

To narrow-down the implementation options described above, we can use the following design constraints and criteria. When attempting to detect taps or presses of a given finger, we face two different types of finger tapping gestures which affect the implementation. In a first case, the user taps a second finger after releasing the first tapped finger. This case provides two discrete finger taps. In other case, the user taps the second finger before releasing the first finger. The former case is easily detected as a sequence of taps. However, distinguishing between whether the taps were a sequential tapping or a "chording" can be difficult with the latter case. Since the interval between each tap can be very short for natural finger tapping gestures, eliminating the latter case as a possibility is difficult, which may cause errors during detection. Thus, we can remove the chording option from embodiments of the present invention to keep the inputs of the text-entry system as clear and coherent as possible.

Alternative embodiments detect tapping from other entities, including taps from other parts of the body, such as the palm of the hand, the elbow, or the foot. Other alternative embodiments detect taps from entities manipulated by the user, such as a stylus, or a device manipulated using another part of the body.

Note that the identity of the entity that caused the tapping event can be captured in a variety of ways, as described in the preceding sections. However, in order to implement a location-free interface for natural tapping gestures, embodiments of the present invention do not consider the location of the tapping event while receiving a sequence of tapping events. Furthermore, embodiments of the present invention do not consider the duration or the pressure of the tapping event while receiving a sequence of tapping events. Instead, these embodiments consider only the identity of the entity that caused each tapping event in the sequence.

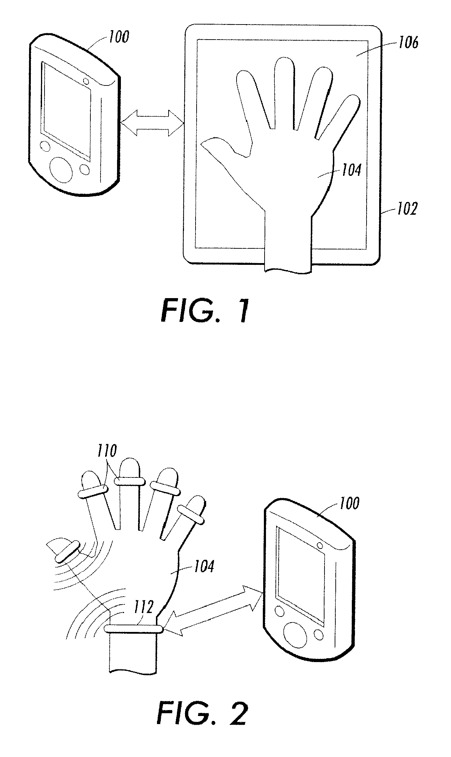

FIGs. 1-4 illustrate exemplary text-entry systems in accordance with embodiments of the present invention. For each system in FIGs. 1-4, a user uses a predefined sequence of finger motions to indicate a character or action (i.e., ctrl or backspace) to be entered into a mobile computing device. These finger motions can be taps, presses, or movements of a finger. For the purpose of illustration, the following sections discuss text-entry systems that respond to finger-triggered events. However, in an alternative embodiment, the text-entry systems respond taps or presses from other entities, including other parts of the body or mechanical devices manipulated by a user, using the principles discussed in the following sections.

FIG. 1 illustrates a PDA 100 coupled to a touch-sensitive device 102 in accordance with an embodiment of the present invention. Touch sensitive device 102 includes a touch-sensitive panel 106, which converts pressure (i.e., taps or presses) from user 104's fingers into electrical signals and delivers the signals to personal digital assistant (PDA) 100. Note that touch-sensitive panel 106 can be capacitive or resistive.

Touch-sensitive device 102 can be coupled to PDA 100 through electrical wiring, such as with an Ethernet or a USB coupling. Alternatively, touch-sensitive device 102 can be coupled to PDA 100 through a wireless link, such as infrared, 802.11 wireless, or Bluetooth.

Although in FIG. 1, as well as in FIGs. 2-4, touch-sensitive device 102 is illustrated as being coupled to a PDA 100, in alternative embodiments, text entry systems are coupled to devices such as a desktop computer, a cellular phone, a mobile computing device, or another electronic device. In another alternative embodiment, the text entry system is incorporated into the PDA.

During operation, when user 104 taps or presses touch-sensitive panel 106 with a finger, touch-sensitive device 102 recognizes which finger user 104 used to touch touch-sensitive panel 106. Touch-sensitive device 102 then signals PDA 100 indicating which finger made contact.

After receiving a sequence of such signals, PDA 100 compares the sequence of signals to a table of predefined sequences in order to convert the sequence of signals into a character of text (i.e., "A," "9," or " ") or into an action (i.e., backspace, delete, or ctrl). In an alternative embodiment, touch-sensitive device 102 converts the sequence of finger-contacts to directly into characters or actions and sends the characters or actions to PDA 100.

FIG. 2 illustrates a series of finger-mounted signaling devices 110 and a wrist-mounted transceiver 112 which is coupled to a PDA 100 in accordance with an embodiment of the present invention. In one embodiment of the present invention, finger-mounted signaling devices 110 are accelerometers, impact sensors, or bending sensors coupled to low-power radio transmitters. In an alternative embodiment, finger-mounted signaling devices are embedded or are otherwise incorporated on a fingernail, such as with a "smart dust" accelerometer.

In one embodiment of the present invention, finger-mounted signaling devices 110 communicate motions of the fingers to wrist-mounted transceiver 112 wirelessly using low-power radio signals. In an alternative embodiment, finger-mounted signaling devices 110 are directly electrically coupled to wrist mounted transceiver 112, such as through a wired coupling. For example, finger-mounted signaling devices 110 may be incorporated in a glove that includes wrist-mounted transceiver 112, wherein the glove includes wires that couple finger-mounted signaling devices 110 to transceiver 112.

During operation, the finger-mounted signaling devices 110 detect when a finger is tapped (or another predefined motion is made with the finger) and then signal the tap, including an identification of which finger was tapped, to wrist-mounted transceiver 112. Wrist-mounted transceiver 112 in turn signals PDA 100, indicating which finger was tapped. After receiving a sequence of such signals, PDA 100 compares the sequence of signals to a table of predefined sequences in order to convert the sequence of signals into a character of text or into an action. In an alternative embodiment, wrist-mounted transceiver 112 converts the sequence of taps directly into characters or actions and sends the characters or actions to PDA 100.

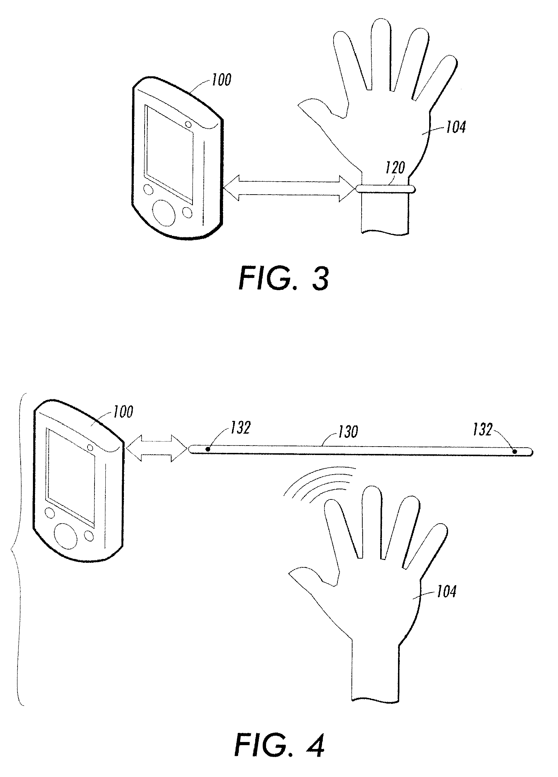

FIG. 3 illustrates a wrist-mounted detection device 120 which is coupled to a PDA in accordance with an embodiment of the present invention. Wrist-mounted detection device 120 detects a motion of a finger (such as a tap of the finger) using bone-conducting microphones, bio-electrical signals, muscular movement, or other physiological indicators of finger motion.

During operation, the wrist-mounted detection device 120 detects when a finger is tapped (or another predefined motion is made with the finger) and signals the tap, including an identification of which finger was tapped, to PDA 100. After receiving a sequence of such signals, PDA 100 compares the sequence of signals to a table of predefined sequences in order to convert the sequence of signals into a character of text or into an action. In an alternative embodiment, wrist-mounted detection device 120 converts the sequence of taps directly into characters or actions and sends the characters or actions to PDA 100.

FIG. 4 illustrates an acoustic sensor 130 which is coupled to a PDA in accordance with an embodiment of the present invention. Acoustic sensor 130 includes two microphones 132.

During operation, when user 104 taps a finger, both microphones 132 pick up the sound of the tap. The acoustic sensor then compares the arrival time of the sounds at each microphone 132 and determines which finger made the tap from a differential in the arrival times. Acoustic sensor 130 then signals the tap, including an identification of which finger was tapped, to PDA 100. After receiving a sequence of such signals, PDA 100 compares the sequence of signals to a table of predefined sequences in order to convert the sequence of signals into a character of text or into an action. In an alternative embodiment, wrist-mounted detection device 120 converts the sequence of taps directly into characters or actions and sends the characters or actions to PDA 100.

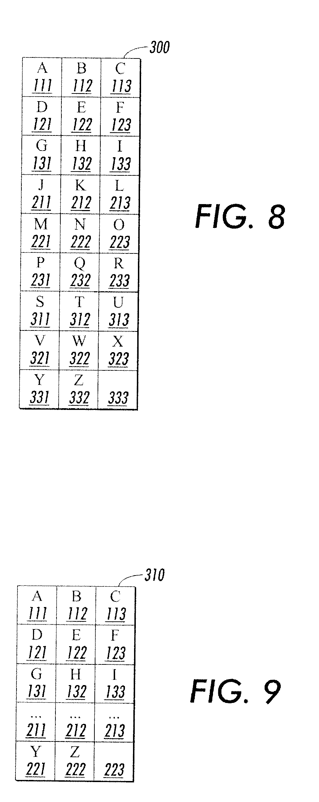

Given the constraints described in the preceding sections, embodiments of the present invention use arpeggiated tapping events (i.e., tapping or pressing separately, rather than simultaneously). For the purpose of illustration, we assume that the tapping events are caused by the fingers of one hand, which means that we assume a text-entry system limited to five discrete inputs, one for each finger. Hence, we mapped each potential character to a sequence of multiple taps. For example, one embodiment of the present invention assigns each letter of the alphabet to a sequence of fingers in which each sequence is of length three (see FIG. 8). However, with alternative embodiments that recognize taps from other entities, the character mapping is expanded to include those tapping events.

One benefit of a text entry system that uses arpeggiated finger taps is that the system can simply determine which finger performed the action, rather then requiring that the fingers press or tap in a predefined location. Location-free characteristics are beneficial because the tapping gesture is more natural and less stressful than pressing on a predefined location. Since a location-free system focuses on which finger is tapped rather than which button is pressed, neither a physical nor a virtual keyboard layout is necessary when the user taps his or her fingers on the sensing surface. The only item needed is a visual aid (or a "finger-stroke-to-character map") to assist users of the text entry system.

In order to improve efficiency and learnability (and hence adoptability), embodiments of the present invention attempt to provide the most effective finger-stroke-to-character maps. When determining which mapping of finger-strokes to characters to employ, we considered the order of the letters to be shown on the map and the number of finger-strokes that is mapped to each letter in that order.

Based on these considerations, embodiments of the present invention employ alphabetic order for the finger-stroke-to-character map in order to reuse the already-learned cognitive map of alphabetic order. The alphabetic order of the finger-stroke-to-character map is expected to reduce the cognitive and perceptual demand on the user, which Smith & Zhai showed to be a desirable dimension of textual interface (see B. A. Smith & S. Zhai, Optimized Virtual Keyboards with and without Alphabetical Ordering - A Novice User Study, Proc. INTERACT 2001 - IFIP International Conference on Human-Computer Interaction, 2001). According to Smith & Zhai, a visual search with "alphabetical tuning" is 9% faster than the search without alphabetical tuning.

In addition, embodiments of the present invention use a set of three-digit number sequences instead of a mixture of sequences of differing lengths (i.e., a mixture that includes one-digit or two-digit sequences) for the finger-stroke-to-character map. Such sequences are selected to maintain consistent patterns within the finger-stroke-to-character map because consistent patterns have been shown to be important in transferring from a controlled process to an automatic process in human performance (see M. Ingmarsson, D. Dinka, and S. Zhai, TNT: A Numeric Keypad Based Text Input Method, Proceedings of the SIGCHI Conference on Human Factors in Computing Systems, ACM Press, 2004).

Alternative embodiments of the present invention use a letter-frequency based finger-stroke-to-character map. The letter-frequency based mapping optimizes finger-stroke efficiency at the cost of assigning a nearly arbitrary sequence to each letter. The most frequently used letters (conventionally thought to be "e-t-a-o-n-s-h-r-d-l-u," in that order) would therefore have the shortest tap sequences.

Alternative embodiments use a "qwerty" position-based finger-stroke-to-character mapping to aid learnability and, in particular, to support "guessability" for novices who are qwerty users. Such a mapping takes advantage of a letter's position on the traditional qwerty keyboard. One such mapping assigns a number to each row, hand, and finger such that each key could be uniquely identified. Ambiguous keys such as 'r' and 't' (both on the top row and typically accessed via the first finger of the left hand) could be disambiguated through a fourth tap. Hence, a map entry for a character in such a system can be in the format: "row, hand, finger, and (if necessary) disambiguation." For such an embodiment, assuming the bottom row=1 (index finger), middle row=2 (middle finger), and top row=3 (ring finger); and left hand=1, and right hand=2, q=314 (i.e., top row, left hand, pinky-finger), w=313 (i.e., top row, left hand, ring finger), ... r=3111 (i.e., top row, left hand, index finger, first character), and t=3112 (i.e., top row, left hand, index finger, second character).

Note that the traditional qwerty keyboard has 10 primary keys in each row. One embodiment of the present invention (a "first tap assignment" embodiment) groups the qwerty keys into 6 groups of five letters each ("QWERT", "YUIOP", "ASDFG", "HJKL;", "ZXCVB", "NM<>/".) In order to select a letter, the user performs two taps; the first tap selects one of these 6 groups and the second tap choose the letter within the group. This is easier to learn because the user need only memorize how the first tap corresponds to a particular group. The position of the letter within the group can be predicted from the user's knowledge of the qwerty layout.

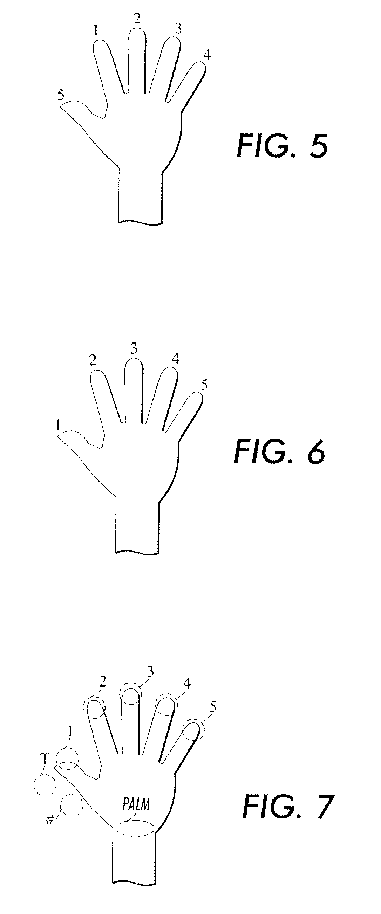

One example of such a "first-tap assignment" is where "T" (a highly "opposed" thumb -- see FIG. 7) selects "QWERT", normal thumb selects "ASDFG", index finger selects "ZXCVB", ring finger selects "NM<>/", pinky selects "HJKL:", and highly-opposed pinky selects "YUIOP". With a second tap using the extended thumb (for numbers 1-5) or extended pinky (for numbers 6-0), the user can select numbers. The middle finger enters space bar, return, backspace, tab, caps, and other symbols.

Other alternative embodiments use "letter shapes" for the finger-stroke-to-character mapping to aid the guessability of the mapping. For example, the shape-based mapping assigns a finger to each of various typographical features such as open/closed, ascending/descending, left-facing/right-facing, etc.

Other alternative embodiments use a combination of the preceding finger-stroke-to-character mappings. For example, vowels can be assigned single finger taps, while consonants are assigned finger tap sequences in alphabetical order. Table 1 presents an exemplary mapping and a corresponding finger-stroke sequence for a phrase given 1 = index finger, 2 = middle finger, 3 = ring finger, 4 = pinky finger, and T = thumb.

**Table 1: Finger-Stroke-to-Character Map**

| | | | | |
|---|---|---|---|---|
| a 1 | e 2 | i 3 | o 4 | u 11 |
| b 12 | c 13 | d 14 | f 21 | g 22 |
| h 23 | j 24 | k 31 | l 32 | m 33 |
| n 34 | p 41 | q 42 | r 43 | s 44 |
| t 112 | v 121 | w 122 | x 113 | y 123 |
| z 211 | character-end T | | space/word-end TT | |

Using this mapping, the phrase "hello world" is input as:
23T2T32T32T4TT122T4T43T32T14TT
(For comparison, on a 12-key (or multi-tap) input device, the phrase is input as 4433555P555666#96667775553 where P = pause (which is required when entering double letters).)

Another alternative embodiment uses special sequences for modifier keys, such as for switching into and out of caps-lock mode, entering a backspace key, or accessing numbers/symbols. With the exception of backspace, the action characters are typically performed less frequently, so requiring more difficult-to-invoke sequences to enter them does not significantly hamper performance. Hence, backspace is assigned to a very easy-to-enter mapping, such as all fingers down at once, an action with the palm, or perhaps a gesture, while other action keys are assigned a more complex sequence.

Another alternative embodiment accounts for finger agility and inter-finger agility when creating a given finger-stroke-to-character map. (Assuming, for example, that the index finger is more agile, and therefore can be tapped more quickly, than the pinky finger, hence a sequence like "1-2" can be executed more quickly than a sequence like "4-3.")

In an alternative embodiment, the tap or press input method can be extended to use a combination of finger taps and strokes to disambiguate the character associated with each finger. For example, in qwerty-type finger-stroke-to-character mapping, the left middle finger types characters "e" (top row), "d" (home row) and "c" (bottom row). To select "e," the user presses down the middle finger and gestures upward, for "d," the user taps the middle finger, and for "c," the user presses the middle finger down and gestures downward. Diagonal gestures can be used to disambiguate the character groups associated with index fingers (e.g., left index types r, t, f, g, c, v, b; right index types y, u, h, j, n, m).

In another alternative embodiment, the palm of the hand can be used to change modes, to perform an action, or as a selection modifier. For example, the heel of the hand can be used to transition between multiple finger-stroke-to-character maps such as lower-case, upper-case, and actions (i.e., tab, up/down, home, etc). On the other hand, the palm of the hand can serve as the backspace indicator.

In another alternative embodiment, tapping events caused by other parts of the body, such as an elbow, a foot, or the palm of the hand, or tapping events caused by mechanical devices, such as a stylus or other mechanical device manipulated using a part of the body, are used to as part of the character mapping.

In another alternative embodiment, in addition to mapping arrangements, the system gives the user visual feedback about the letters that could be produced depending on which finger is tapped next while the user is entering a sequence of finger-strokes.

FIGs. 5-7 illustrate the process of identifying fingers in accordance with an embodiment of the present invention. Moreover, FIGs. 8-10 presents a finger-stroke-to-character map in accordance with an embodiment of the present invention.

More specifically, FIG. 5 illustrates a first identification of fingers in accordance with an embodiment of the present invention. In FIG. 5, the identification of fingers starts with the index finger as finger "1," moves across the hand to the pinky-finger, which is finger "4" and to the thumb, which is finger "5." FIG. 6 illustrates a second identification of fingers in accordance with an embodiment of the present invention. In FIG. 6, the identification of fingers starts with the thumb as finger "1" and moves across the hand to the pinky-finger, which is finger "5." FIG. 7 illustrates a third identification of fingers which includes an identification for the palm of the hand in accordance with an embodiment of the present invention. In FIG. 7, the dashed circles indicate an identification of the fingers and the palm of the hand. Each of the fingers has one identification (i.e., "2" for the index finger) and the palm of the hand has one identification. In contrast, the thumb has three identifications, "1," "T," and "#." Hence, for embodiments of the present invention, the thumb appears as three separate tapping entities to the text entry system (i.e., one tapping entity for each identification).

When using a text-entry system (such as the systems in FIGs. 1-4), to output a given character, user 104 performs sequences of finger motions (i.e., taps or presses) according to finger-stroke-to-character mapping for the text-entry system. For example, FIG. 8 presents a finger-stroke-to-character map 300 in accordance with an embodiment of the present invention. In FIG. 8, the character "A" maps to the sequence "1-1-1." Using the finger identification system of FIG. 5, user 104 taps or presses using the index finger 3 times for the "A" character. Alternatively, user 104 taps or presses the index finger twice and the middle finger once for the "B" character. Using the finger identification system of FIGs. 6, user 104 taps or presses using the thumb 3 times for an "A" character or using the thumb twice and the index finger once for a "B" character. Using the finger identification system of FIG. 7, user 104 performs similar finger-strokes to FIG. 6, with the thumb tapped as a "1" identification and not as a "T" identification or the "#" identification.

In an alternative embodiment, one finger serves a "repeat stroke" finger, which, when tapped or pressed by user 104, repeats the last finger-stroke in the sequence. For example, FIG. 9 presents a finger-stroke-to-character map 310 with a "repeat" finger-stroke in accordance with an embodiment of the present invention. Using the finger identification system of FIG. 5 with the pinky finger as the "repeat stroke" finger, user 104 taps or presses the index finger, then taps or presses the pinky finger, and finally taps or presses the index finger again for the "A" character. (Note that tapping or pressing the pinky finger "repeats" the index finger; a sequence that is identical to the "1-1-1" finger-stroke of FIG. 8.) Alternatively, user 104 taps or presses the pattern index-pinky-middle for the "B" character. Note that the use of the "repeat stroke" finger can enable user 104 to enter text more rapidly, as tapping the desired finger twice can be slower than tapping the desired finger and then tapping the "repeat-stroke" finger.

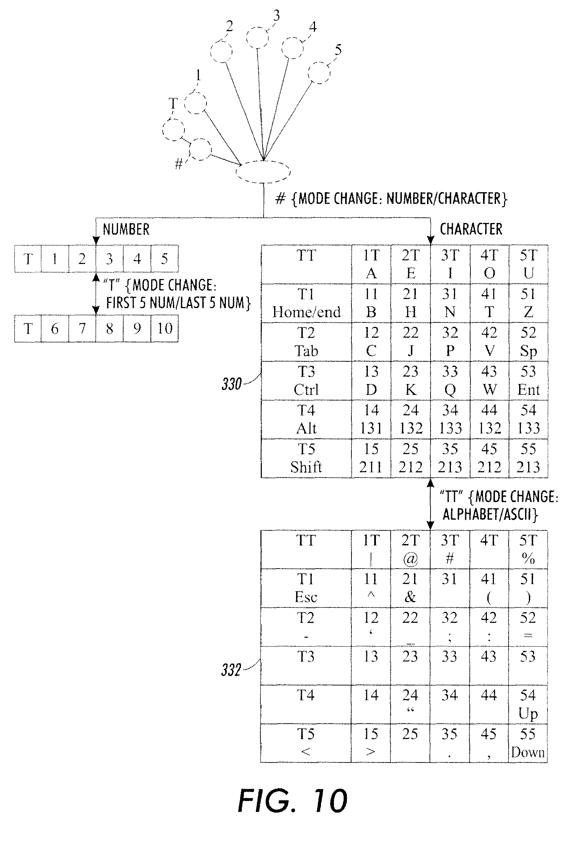

In another alternative embodiment, several unique character/number maps are associated with the text entry device. FIG. 10 illustrates a finger-stroke-to-character map that includes two number maps, finger-stroke-to-alphabetic-character map 330, and finger-stroke-to-ASCII-character map 332 in accordance with an embodiment of the present invention. Note that the character map in FIG. 10 uses two-finger-stroke sequences to represent each character or number, which simplifies entering text.

As shown in FIG. 10, switching between number maps and character maps is achieved using the "#" identification of the thumb. When in the "number mode" (i.e., using the number finger-stroke-to-character map) tapping or pressing the "T" identification on the thumb cycles between the first 5 digits and the last 5 digits. Within each number map, a single tap or press of a given finger results in a corresponding number being output. For example, the number 1 is output using the "1" identification for the thumb while the first-5-num map is active, as is the number 6 while the last-5-num map is active. Alternatively, while in the character mode, tapping or pressing "T-T" (i.e., two taps of the "T" identification on the thumb) cycles between the alphabetic character map and the ASCII character map. Within the maps, entering a two-stroke sequence results in the corresponding character being output or action being taken.

In addition to the 30 "primary" keys, and the 10 numeric keys, there are 7 extra symbol keys, 4 space keys (space, backspace, return, tab), and several modifier keys (shift, control, alt, escape, windows, delete, insert, home/end, page up/dn, arrows, functions, etc.). By using the middle finger and the 5+2 identifications, the 7 extra symbol keys can be covered. The four space keys can be indicated by an alternate thumb identification, or perhaps by laying the whole hand flat on the surface (e.g., a fully flat hand can be space, while a flat hand without thumb can be backspace). Modifier keys can be accessed through a modal sequence or also through the alternate thumb identifications.

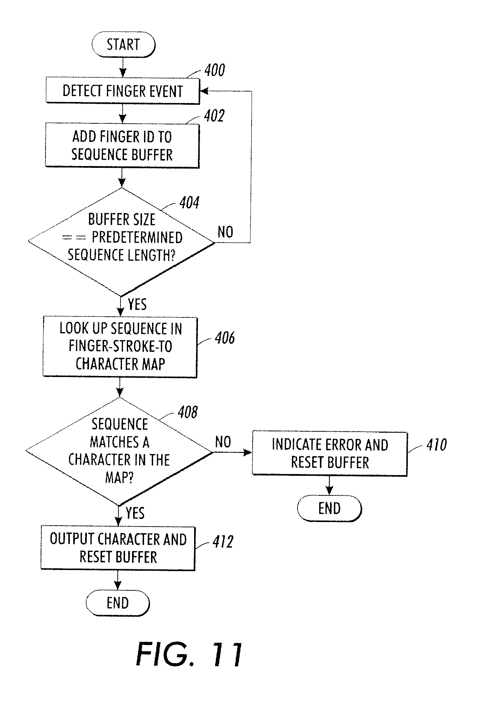

FIG. 11 presents a flowchart illustrating the process of entering text using a sequence of a predetermined length in accordance with an embodiment of the present invention. Note that while finger events are used for the purpose of illustration, in alternative embodiments, the process of entering text includes events caused by other entities, such as another part of the body or a mechanical device manipulated by user 104.

The process starts when the system detects a tapping event (i.e., a finger-stroke) (step 400). For example, user 104 may tap or press a finger on touch-sensitive panel 106 or may make a recognized motion with a finger while finger-mounted signaling devices 110 are mounted user 104's fingers.

The system determines which finger caused the event and stores the identity of the finger to an entry in a sequence buffer (step 402). The system then checks the sequence buffer to determine if storing the entry in the sequence buffer has caused the buffer to reach a predetermined size (step 404). For example, for one embodiment of the present invention, the sequence buffer reaches a predetermined size when the system has stored finger-identities relating to three different finger-strokes in the sequence buffer. If the sequence buffer has not reached the predetermined size, the system returns to step 400 and awaits a next finger-triggered event. Otherwise, the system compares the sequence stored on the sequence buffer to the sequences in a finger-stroke-to-character map (step 406). The finger-stroke-to-character map includes a number of finger-stroke sequences and an output character that corresponds to each sequence.

The system determines if the finger-stroke sequence matches a finger-stroke sequence in the finger-stroke-to-character map (step 408). If not, the system indicates an error and resets the sequence buffer (step 410). Otherwise, the system outputs a character and resets the buffer (step 412).

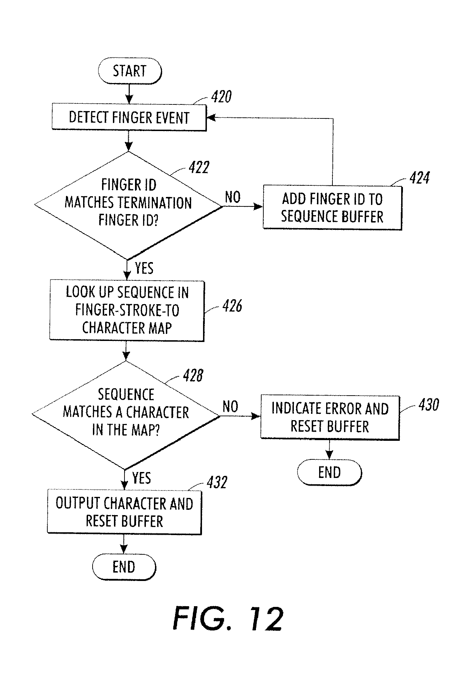

FIG. 12 presents a flowchart illustrating the process of entering text using a termination event in accordance with an embodiment of the present invention. The process starts when the system detects a finger-triggered event (i.e., a finger-stroke) (step 420).

The system then determines which finger caused the event and determines if the finger identification matches a "termination" finger identification (step 422). For example, the termination finger identification may include detecting a "#" or a "T," which corresponds to a highly opposed thumb (see FIG. 7). If the finger identification does not match a termination finger identification, the system adds the identity of the finger to a sequence buffer (step 424). The system then returns to step 420 and awaits the next finger-triggered event. Otherwise, the system compares the sequence stored on the sequence buffer to the sequences in a finger-stroke-to-character map (step 426).

The system then determines if the finger-stroke sequence matches a finger-stroke sequence present in the finger-stroke-to-character map (step 428). If not, the system indicates an error and resets the sequence buffer (step 430). Otherwise, the system outputs a character and resets the buffer (step 432).

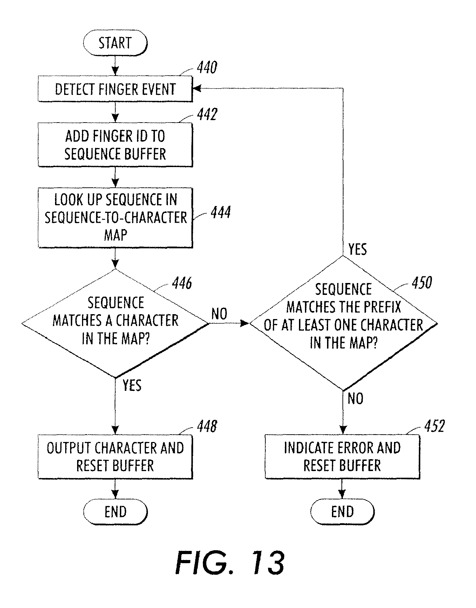

FIG. 13 presents a flowchart illustrating the process of entering text using prefixes in accordance with an embodiment of the present invention. The process starts when the system detects a finger-triggered event (i.e., a finger-stroke) (step 440).

The system determines which finger caused the event and stores the identity of the finger to an entry in a sequence buffer (step 442). The system then compares the sequence stored on the sequence buffer to the sequences in a finger-stroke-to-character map (step 444).

The system determines if the finger-stroke sequence matches a finger-stroke sequence present in the finger-stroke-to-character map (step 446). If so, the system outputs a character and resets the buffer (step 448). Otherwise, the system determines if the sequence matches the prefix of at least one character in the finger-stroke to character map (step 450). If so, the system returns to step 440 and awaits a next finger-triggered event. Otherwise, the system indicates an error and resets the sequence buffer (step 452).

## Claims

1. A method for entering text, comprising:
receiving a sequence of finger-triggered events;
attempting to match the sequence of finger-triggered events to one or more predetermined sequences of finger-triggered events; and
if the sequence matches a predetermined sequence, outputting at least one character corresponding to the predetermined sequence.

2. The method of claim 1, wherein receiving the sequence of finger-triggered events involves:
detecting a series of finger-triggered events;
identifying a finger that caused each event in the series; and
recording the identity of the finger that caused each event in the series.

3. The method of claim 2, wherein detecting the series of finger-triggered events involves at least one of:
detecting contact of a finger on a touch-sensitive surface;
detecting taps of a finger on a sound-sensitive surface;
detecting finger motions by measuring at least one of, muscle movement, bone movement, electrical impulses in the skin, or other physiological indicators; and
detecting finger motions using sensors worn, mounted on, or implanted in at least one finger.

4. The method of any of the preceding claims, wherein attempting to match the sequence of finger-triggered events involves:
determining when a predetermined number of finger-triggered events have occurred; and
when the predetermined number of finger-triggered events have occurred, attempting to match the predetermined number of finger-triggered events to one or more predetermined sequences of finger-triggered events.

5. The method of any of the preceding claims, wherein attempting to match the sequence of finger-triggered events involves:
determining when an end-of-sequence finger-triggered event has occurred; and
when an end-of-sequence finger-triggered event occurs, attempting to match the sequence of finger-triggered events preceding the end-of-sequence finger-triggered event to one or more predetermined sequences of finger-triggered events.

6. The method of any of the preceding claims, wherein attempting to match the sequence of finger-triggered events involves:
determining, as each finger-triggered event occurs, whether the finger-triggered event in combination with a preceding sequence of finger-triggered events is a prefix of a predetermined sequence of finger-triggered events;
if so, awaiting a next finger-triggered event; and
if not, attempting to match the finger-triggered event in combination with the preceding sequence of finger-triggered events to one or more predetermined sequences of finger-triggered events.

7. The method of any of the preceding claims, wherein the sequence of finger-triggered events includes at least one of:
an event triggered by another part of the body; or
an event triggered by manipulating a mechanical device.

8. An apparatus for entering text, comprising:
a receiving mechanism configured to receive a sequence of finger-triggered events;
a matching mechanism coupled to the receiving mechanism, wherein the matching mechanism is configured to attempt to match the sequence of finger-triggered events to one or more predetermined sequences of finger-triggered events; and
an outputting mechanism coupled to the matching mechanism, wherein if the sequence matches a predetermined sequence, the outputting mechanism is configured to output at least one character corresponding to the predetermined sequence.

9. The apparatus of claim 8, wherein the receiving mechanism is configured to receive the sequence of finger-triggered events by:
detecting a series finger-triggered events;
identifying a finger that caused each event in the series; and
recording the identity of the finger that caused each event in the series.

10. The apparatus of claim 8 or claim 9, wherein the receiving mechanism is configured to detect the series of finger-triggered events by at least one of:
detecting contact of a finger on a touch-sensitive surface;
detecting taps of a finger on a sound-sensitive surface;
detecting finger motions by measuring at least one of, muscle movement, bone movement, electrical impulses in the skin, or other physiological indicators; and
detecting finger motions using sensors worn, mounted on, or implanted in at least one finger.

11. The apparatus of any of claims 8 to 10, wherein, while attempting to match the sequence of finger-triggered events, the matching mechanism is configured to:
determine when a predetermined number of finger-triggered events have occurred; and
when the predetermined number of finger-triggered events have occurred, to attempt to match the predetermined number of finger-triggered events to one or more predetermined sequences of finger-triggered events.

12. Apparatus according to any of claims 8 to 11, further comprising a display mechanism configured to display the at least one character to a user.
